# EUROPÄISCHE PATENTSCHRIFT

(11) **EP 4 259 488 B1**
(45) Veröffentlichungstag und Bekanntmachung des Hinweises auf die Patenterteilung: **26.03.2025**
(21) Anmeldenummer: 21806181.0
(22) Anmeldetag: 03.11.2021
(51) Int. Cl.: B60R 13/02

(54) **FESTLEGEVORRICHTUNG ZUM WERKZEUGLOSEN ANEINANDER FESTLEGEN ZWEIER BAUTEILE EINES KRAFTFAHRZEUGS SOWIE KRAFTFAHRZEUG MIT EINER DERARTIGEN FESTLEGEVORRICHTUNG**
SECURING DEVICE FOR SECURING, WITHOUT TOOLS, TWO MOTOR VEHICLE COMPONENTS AGAINST EACH OTHER, AND MOTOR VEHICLE COMPRISING SUCH A SECURING DEVICE
DISPOSITIF DE FIXATION POUR FIXER, SANS OUTILS, DEUX COMPOSANTS DE VÉHICULE AUTOMOBILE L'UN CONTRE L'AUTRE, ET VÉHICULE AUTOMOBILE COMPRENANT UN TEL DISPOSITIF DE FIXATION

(30) Priorität: 10.12.2020 DE 102020215603
(43) Veröffentlichungstag der Anmeldung: 18.10.2023
(73) Patentinhaber: Stellantis Auto SAS, 78300 Poissy (FR)
(72) Erfinder: TRAPP, Patrick, 65428 Rüsselsheim am Main (DE)
(74) Vertreter: BCIP
(86) Internationale Anmeldenummer: PCT/EP2021/080494
(87) Internationale Veröffentlichungsnummer: WO 2022/122255

(56) Entgegenhaltungen:
- DE-A1- 102014 207 120

## Beschreibung

Die Erfindung betrifft eine Festlegevorrichtung zum werkzeuglosen aneinander Festlegen zweier Bauteile eines Kraftfahrzeugs sowie ein Kraftfahrzeug mit einer derartigen Festlegevorrichtung.

Festlegevorrichtungen zum werkzeuglosen aneinander Festlegen zweier Bauteile eines Kraftfahrzeugs sind in unterschiedlicher Ausgestaltung aus dem Stand der Technik bekannt. Bei diesen werden beispielsweise zwei Bauteile mittels Clipsverbindung aneinander festgelegt. Hierbei wird ein erstes Bauteil entlang einer ersten Fügerichtung auf ein zweites Bauteil geschoben und dort verclipst.

Bei den bekannten Festlegevorrichtungen hat es sich als nachteilig herausgestellt, dass die Komponenten der Festlegevorrichtung herstellungsbedingt ausreichend Spiel haben müssen, um ein Hintergriffmittel in einer Aufnahme anordnen zu können. Hierdurch kann beim Betrieb des Kraftfahrzeugs ein Entstehen von Geräuschen nie ganz vermieden werden.

Um diesem Problem zu begegnen sind aus dem Stand der Technik Festlegevorrichtungen bekannt, bei denen zwei Bauteile zusätzlich durch ein manuell betätigbares Festlegemittel, beispielsweise eine Schraubverbindung, aneinander festgelegt werden. Solchenfalls ist der Zeitaufwand für die Montage zweier Bauteile erhöht.

Aus dem Recherchebericht des DPMA zur prioritätsbegründenden DE 102020215603.4 ist die gattungsgemäße DE 102014207120 A1 bekannt.

Eine Aufgabe eines Ausführungsbeispiels der Erfindung ist, eine Festlegevorrichtung zum werkzeuglosen aneinander Festlegen zweier Bauteile eines Kraftfahrzeugs sowie ein Kraftfahrzeug mit einer derartigen Festlegevorrichtung vorzuschlagen, bei der eine Relativbewegung der beiden Bauteile im montierten Zustand reduziert ist.

Diese Aufgabe wird gelöst durch eine Festlegevorrichtung zum werkzeuglosen aneinander Festlegen zweier Bauteile eines Kraftfahrzeugs mit mindestens einem an einem ersten Bauteil angeordneten Hintergriffmittel, das einen Koppelabschnitt und an einem freien Ende einen Kopfabschnitt aufweist, der bezüglich des Koppelabschnitts einen erweiterten Querschnitt umfasst, mit mindestens einer an einem zweiten Bauteil angeordneten Aufnahme, die eine durchgehende Aussparung umfasst, welche einen ersten Bereich in den das Hintergriffmittel entlang einer ersten Fügerichtung mit dem freien Ende in die Aussparung einführbar und in einer Fügezwischenposition anordenbar ist, und welche einen zweiten Bereich umfasst, der über den ersten Bereich zugänglich ist, der quer zur ersten Fügerichtung betrachtet einen Querschnitt umfasst, der kleiner ist als der Querschnitt des Kopfabschnitts des Hintergriffmittels, und in den das Hintergriffmittel mit seinem Koppelabschnitt aus der Fügezwischenposition entlang einer quer oder schräg zur ersten Fügerichtung verlaufenden zweiten Fügerichtung bewegbar und in einer Fügeendposition anordenbar ist, in der das Hintergriffmittel mit seinem Koppelabschnitt in Gänze oder zumindest abschnittsweise in dem zweiten Bereich der Aussparung angeordnet und ein Bewegen entgegen der ersten Fügerichtung durch den an einer dem ersten Bauteil abgewandten Seite der Aufnahme angeordneten Kopfabschnitt zumindest begrenzt ist, und mit mindestes einem Rastelement, das am ersten Bauteil und/oder am zweiten Bauteil angeordnet ist und das zumindest beim Erreichen der Fügeendposition mit einer am zweiten Bauteil bzw. ersten Bauteil angeordneten Rastkontur einen Hintergriff gegen eine Relativbewegung von erstem Bauteil und zweitem Bauteil entgegen der zweiten Fügerichtung bildet.

Dadurch, dass eine Relativbewegung des ersten Bauteils zum zweiten Bauteil durch das Rastelement in der Fügeendposition durch Bilden eines Hintergriffs in Richtung der zweiten Fügerichtung verhindert wird, ist auch das Hintergriffmittel in der Fügeendposition gegen ein Bewegen entgegen der zweiten Fügerichtung festgelegt. Hierdurch lassen sich die Anforderungen an die Fertigungstoleranzen vom Aufnahme- und Hintergriffmittel und gleichzeitig ein Spiel zwischen Hintergriffmittel und Aufnahme in der Fügeendposition reduzieren.

Bei einer Ausführungsform der Festlegevorrichtung verläuft die zweite Fügerichtung quer zur ersten Fügerichtung. Das Hintergriffmittel wird mit seinem Kopfabschnitt in den ersten Bereich der Aussparung in der Aufnahme entlang der ersten Fügerichtung eingesteckt, so dass dieser eine die Aussparung umfassende Wandung der Aufnahme, insbesondere vollständig, durchgreift. Durch Überführen des Hintergriffmittels von der Fügezwischenposition quer zur ersten Fügerichtung, also entlang der zweiten Fügerichtung, wird solchenfalls der Kopfabschnitt berührend oder mit einem Spalt zur Wandung der die Aussparung umfassenden Aufnahme geführt, wobei dieser entgegen der ersten Fügerichtung durch das Anliegen an der Wandung einen Hintergriff bildet. Hierdurch ist ein Bewegen des Hintergriffmittels, sobald der Koppelabschnitt im zweiten Bereich der Aussparung angeordnet ist, durch den Kopfabschnitt verhindert.

Das Hintergriffmittel ist erfindungsgemäß so ausgebildet, dass das mindestens eine Hintergriffmittel hakenförmig ausgebildet ist und/oder dass der Koppelabschnitt in oder schräg zur ersten Fügerichtung erstreckt ist und der Kopfabschnitt den Koppelabschnitt abgewinkelt oder umgebogen quer oder schräg zur ersten Fügerichtung verlaufend fortsetzt.

Hierdurch ist der Koppelabschnitt und der Kopfabschnitt des Hintergriffmittels einfach realisierbar. Darüber hinaus kann sowohl der Koppelabschnitt als auch der Kopfabschnitt quer zur Erstreckungsrichtung den gleichen Querschnitt umfassen. Solchenfalls ist das Hintergriffmittel beispielsweise durch Verbiegen eines streifenförmigen Körpers herstellbar.

Ein zumindest nahezu spielfreies Anordnen des Hintergriffmittels in der Aufnahme lässt sich realisieren, wenn der Querschnitt quer zur ersten Fügerichtung des zweiten Bereichs der Aussparung korrespondierend, insbesondere komplementär, zum Querschnitt des Koppelabschnitts des Hintergriffmittels ausgebildet ist. Solchenfalls liegt das Hintergriffmittel mit dem Koppelabschnitt flächen- oder linienhaft an eins, zwei oder drei Innenflächen des zweiten Bereichs der Aussparung in der Fügeendposition an.

Um eine Relativbewegung vom ersten Bauteil zum zweiten Bauteil im aneinander festgelegten Zustand in oder entgegen der ersten Fügerichtung weiter zu reduzieren, erweist es sich als vorteilhaft, wenn die Aufnahme mindestens eine sich in Richtung der zweiten Fügerichtung keil- oder bogenförmig erweiternde Kulisse umfasst, die auf der dem ersten Bauteil abgewandten Seite und an den zweiten Bereich der Aussparung angrenzend angeordnet ist und an der der Kopfabschnitt des Hintergriffmittels zumindest in der Fügeendstellung anliegt.

Hierdurch wird der Kopfabschnitt des Hintergriffmittels beim Überführen von der Fügezwischenstellung in die Fügeendstellung in Richtung auf die Aufnahme verspannt.

Um die Gefahr einer Geräuschentwicklung beim Betrieb des Kraftfahrzeugs weiter zu reduzieren ist bei einer Weiterbildung der Festlegevorrichtung vorgesehen, dass die Aufnahme auf der dem ersten Bauteil abgewandten Seite ein Dämpfmittel umfasst, an dem der Kopfabschnitt zumindest in der Fügeendstellung anliegt und/oder dass der Kopfabschnitt an dem der Aufnahme in der Fügeendstellung zugewandten Seite ein Dämpfmittel umfasst mit dem der Kopfabschnitt zumindest in der Fügeendstellung an der Aufnahme anliegt.

Das Dämpfmittel kann beispielsweise die keil- oder bogenförmig erweiternde Kulisse der Aufnahme umfassen. Durch Vorsehen eines Dämpfmittels lässt sich die Gefahr eines Entstehens von Geräuschen durch eine Relativbewegung des ersten Bauteils zum zweiten Bauteil reduzieren.

Die Gefahr eines Entstehens von Geräuschen lässt sich weiter reduzieren sowie die Qualität des Festlegens des ersten Bauteils an das zweite Bauteil verbessern, wenn die Festlegevorrichtung mindestens ein Federmittel umfasst, das zwischen erstem Bauteil und zweitem Bauteil anordenbar oder angeordnet ist und durch das das erste Bauteil und das zweite Bauteil zumindest in der Fügeendstellung mit einer in oder schräg zur ersten Fügerichtung wirkenden Kraft voneinander weg spannbar sind.

Bei einer Weiterbildung der Festlegevorrichtung ist vorgesehen, dass das mindestens eine Rastelement bezüglich der ersten Fügerichtung elastisch verdrängbar ist und/oder dass das Rastelement und das Federmittel ein gemeinsames einstückiges Bauteil bilden.

Wenn das Rastelement bezüglich der ersten Fügerichtung elastisch verdrängbar ist und/oder wenn das Rastelement und das Federmittel ein gemeinsames einstückiges Bauteil bilden, ist die Festlegevorrichtung kompakt ausbildbar und ein automatisches Überführen des Rastelements in oder hinter die Rastkontur gewährleistbar.

Wenn das Rastelement und das Federmittel ein gemeinsames einstückiges Bauteil bilden, ist die Festlegevorrichtung bauteilreduziert ausbildbar.

Die Rastkontur kann technisch beliebig ausgebildet sein, sofern sie der Funktion nachkommt, das Rastelement in der Fügeendposition derart festzulegen, dass die Kombination aus Rastkontur und Rastelement das erste Bauteil und das zweite Bauteil gegen eine Relativbewegung entgegen der zweiten Fügerichtung festlegen.

Bei einer Ausführungsform der Festlegevorrichtung ist vorgesehen, dass die am zweiten Bauteil bzw. am ersten Bauteil angeordnete Rastkontur eine Vertiefung umfasst, in die das Rastelement zumindest in der Fügeendstellung quer zur zweiten Fügerichtung verrastbar ist und/oder dass die am zweiten Bauteil bzw. am ersten Bauteil angeordnete Rastkontur eine Erhebung umfasst, an der das Rastelement beim Überführen von der Fügezwischenstellung in die Fügeendstellung entlanggleitbar und bei Erreichen der Fügeendstellung außer Eingriff mit der Erhebung bringbar ist, um in Richtung auf das zweite Bauteil bzw. auf das erste Bauteil vorzuspringen.

Durch beide baulichen Umsetzungen der Rastkontur, entweder als Vertiefung oder als Erhebung, ist ein Anschlag des Rastelements in der Fügeendposition gewährleistbar.

Der Begriff "beziehungsweise" wird gemäß seinem ursprünglichen Wortsinn benutzt. Dass heißt, ist am ersten Bauteil die Rastkontur angeordnet, ist am zweiten Bauteil das Rastelement angeordnet. Entsprechend ist das Rastelement am zweiten Bauteil angeordnet, wenn die Rastkontur am ersten Bauteil angeordnet ist. Hierdurch sind Rastkontur und Rastelement und deren Anordnung in Beziehung zueinander gesetzt, wodurch entsprechend eine entgegengesetzte, insbesondere komplementäre Anordnung des weiteren Bauteils erfolgt.

Bei einer Weiterbildung letztgenannter Ausführungsform erweist es sich als vorteilhaft, wenn die Rastkontur einen rampenartigen Querschnitt umfasst, durch den das Rastelement beim Überführen von der Fügezwischenstellung in die Fügeendstellung in Richtung quer zur zweiten Fügerichtung verdrängbar ist.

Durch das Vorsehen eines rampenartigen Querschnitts der Rastkontur, kann das Rastelement, insbesondere wenn es einstückig mit dem Federelement ausgebildet ist, im Zuge des Überführens des ersten Bauteils zum zweiten Bauteil in Richtung der zweiten Fügerichtung quer zur zweiten Fügerichtung, also insbesondere in Richtung der ersten Fügerichtung, verdrängt werden, um in der Fügeendstellung, also nach Überwinden der Rastkontur, hinter oder an der Rastkontur zu verrasten.

Die Gefahr eines Entstehens von Geräuschen lässt sich weiter reduzieren, wenn das erste Bauteil und das zweite Bauteil in der der Fügezwischenstellung zumindest abschnittsweise, insbesondere flächenhaft, aneinander anliegen.

Bei Ausführungsformen der Festlegevorrichtung ist vorgesehen, dass die Aufnahme und/oder das Rastelement lösbar oder unlösbar am zweiten Bauteil festlegbar oder festgelegt sind und/oder dass das mindestens eine Hintergriffmittel und/oder die Rastkontur lösbar oder unlösbar am ersten Bauteil festlegbar oder festgelegt sind.

Wenn die Aufnahme und/oder das Rastelement lösbar am zweiten Bauteil festlegbar sind, können diese beispielsweise angeschraubt oder Dergleichen sein. Wenn das mindestens eine Hintergriffmittel und/oder die Rastkontur lösbar am ersten Bauteil festlegbar ist, können diese auf einfache Weise am ersten Bauteil angeschraubt sein. Wenn die Aufnahme, das Rastelement, das Hintergriffmittel und/oder die Rastkontur am ersten Bauteil, bzw. am zweiten Bauteil unlösbar festgelegt sind, können diese beispielsweise angeklebt, angeschweißt oder angelötet sein.

Bei einer Weiterbildung der Festlegevorrichtung ist eine unlösbare Verbindung der einzelnen Komponenten vorgesehen, insbesondere indem die Aufnahme, das Rastelement und/oder das zweite Bauteil ein einstückiges gemeinsames Bauteil bilden und/oder in dem das mindestens eine Hintergriffmittel, die Rastkontur und/oder das erste Bauteil ein einstückiges gemeinsames Bauteil bilden.

Das zweite Bauteil kann beispielsweise ein Blechbiegeteil umfassen, bei dem die Aufnahme und/oder das Rastelement einen Stanz- oder Biegestanzabschnitt umfassen.

Darüber hinaus ist es denkbar, dass das Hintergriffmittel und die Rastkontur, die gemeinsam mit dem ersten Bauteil ein einstückiges, gemeinsames Bauteil bilden, im Zuge eines Spritzgussverfahrens, hergestellt sind.

Durch beide zuvor skizzierte Möglichkeiten ist die Festlegevorrichtung bauteilreduziert und kompakt ausbildbar.

Die Stabilität des Anordnens des ersten Bauteils am zweiten Bauteil lässt sich verbessern, wenn die Festlegevorrichtung mindestens zwei Hintergriffmittel und mindestens ein zwischen den mindestens zwei Hintergriffmitteln angeordnetes Rastelement und/oder mindestens zwei Aufnahme und mindestens eine zwischen den mindestens zwei Aufnahmen angeordnete Rastkontur umfasst.

Das erste Bauteil und das zweite Bauteil können beliebige Komponenten des Kraftfahrzeugs umfassen. Bei einer Ausführungsform der Festlegevorrichtung ist vorgesehen, dass das erste Bauteil eine Blende und/oder dass das zweite Bauteil ein Rahmenelement des Kraftfahrzeugs umfasst.

Schließlich wird die Aufgabe gelöst durch ein Kraftfahrzeug mit mindestens einem ersten Bauteil, mindestens einem zweiten Bauteil und mit mindestens einer Festlegevorrichtung, mit mindestens einem der zuvor genannten Merkmale, durch die das erste Bauteil werkzeuglos am zweiten Bauteil festlegbar ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Festlegevorrichtung.

In der Zeichnung zeigt:
- Figur 1: Eine perspektivische Vorderansicht auf ein erstes Ausführungsbeispiel der Festlegevorrichtung mit erstem Bauteil und zweitem Bauteil in der Fügezwischenposition;
- Figur 2: Eine perspektivische Vorderansicht auf das Ausführungsbeispiel gemäß Figur 1 mit erstem Bauteil und zweitem Bauteil in der Fügeendposition;
- Figur 3: Eine perspektivische Vorderansicht auf ein erstes Bauteil der Festlegevorrichtung gemäß Figur 1;
- Figur 4: Eine perspektivische Vorderansicht auf ein zweites Bauteil der Festlegevorrichtung gemäß Figur 1.

Die Figuren zeigen eine insgesamt mit dem Bezugszeichen 2 versehene Festlegevorrichtung zum werkzeuglosen aneinander Festlegen zweier Bauteile eines Kraftfahrzeugs. Durch die Festlegevorrichtung 2 ist ein erstes Bauteil 4 an einem zweiten Bauteil 6 festlegbar. Hierzu umfasst das erste Bauteil 4 bei dem in den Figuren gezeigten Ausführungsbeispiel zwei Hintergriffmittel 8 sowie eine zwischen den beiden Hintergriffmitteln 8 angeordnete Rastkontur 10. Diese interagieren mit einer Aufnahme 12 und einem Rastelement 14 am zweiten Bauteil 6.

Zum Fügen des ersten Bauteils 4 mit dem zweiten Bauteil 6 wird das erste Bauteil 4 mit den beiden Hintergriffmitteln 8 entlang einer ersten Fügerichtung 16 in eine durchgehende Aussparung 18 der Aufnahme 12 hindurchgesteckt. Diese umfasst einen ersten Bereich 20, durch den das Hintergriffmittel 8 mit einem Koppelabschnitt 22 und einem Kopfabschnitt 24 einführbar ist.

Bei dem in den Figuren gezeigten Ausführungsbeispiel setzt der Kopfabschnitt 24 des Hintergriffmittels 8 den Koppelabschnitt 22 in einer schräg zur Fügerichtung 16 abgewinkelten Richtung fort.

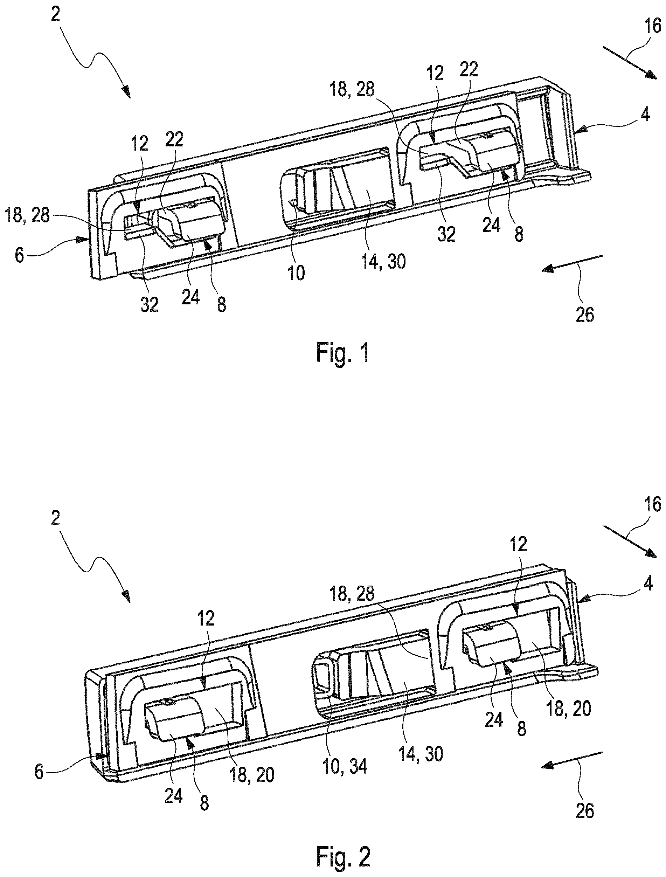

Figur 1 zeigt die Festlegevorrichtung 2, bei der sich das erste Bauteil 4 und das zweite Bauteil 6 in einer Fügezwischenposition befinden. In dieser ist das Hintergriffmittel 8 mit seinem Kopfabschnitt 24 und dem Koppelabschnitt 22 durch den ersten Bereich 20 der Aussparung 18 hindurchgesteckt. Das Rastelement 14 liegt an der Rastkontur 10 an.

Figur 2 zeigt die Festlegevorrichtung 2 gemäß Figur 1, bei der das erste Bauteil 4 relativ zum zweiten Bauteil 6 in eine zweite Fügerichtung 26 bewegt wurde. Die zweite Fügerichtung 26 ist quer zur ersten Fügerichtung 16 verlaufend. Durch das Bewegen des ersten Bauteils 4 entlang zur zweiten Fügerichtung 26 wird das Hintergriffmittel 8 mit seinem Koppelabschnitt 22 in einen zweiten Bereich 28 der Aussparung 18 verschoben. Der Kopfabschnitt 24 des Hintergriffmittels 8 ist hierbei außer Eingriff mit dem zweiten Bereich 28 der Aussparung 18 und hintergreift die Aussparung 18 auf der dem ersten Bauteil 4 abgewandten Seite der Aufnahme 12. Hierdurch ist das erste Bauteil 4 gegen ein Bewegen entgegen der ersten Fügerichtung 16 bezüglich des zweiten Bauteils 6 begrenzt.

Beim Überführen des ersten Bauteils 4 in Richtung der zweiten Fügerichtung 26 erreicht das zweite Bauteil 4 eine Fügeendposition, in der der Koppelabschnitt 22 am Ende des zweiten Bereichs 28 der Aussparung 18 anliegt. In dieser Fügeendstellung wird das Rastelement 14 derart bezüglich der Rastkontur 10 angeordnet, dass es einen Hintergriff gegen eine Relativbewegung von erstem Bauteil 4 und zweitem Bauteil 6 entgegen der zweiten Fügerichtung 26 bildet.

Bei dem in den Figuren gezeigten Ausführungsbeispiel der Festlegevorrichtung 2 ist der zweite Bereich 28 der Aussparung 18 bezüglich seines Querschnitts quer zur ersten Fügerichtung 16 derart ausgebildet, dass er korrespondierend, insbesondere komplementär, zu einem Querschnitt des Koppelabschnitts 22 des Hintergriffmittels 8 ausgebildet ist. Hierdurch lässt sich gewährleisten, dass das Hintergriffmittel 8 mit seinem Koppelabschnitt 22 an drei Seiten des zweiten Bereichs 28 der Aussparung 18 anliegt.

Das Rastelement 14 umfasst bei dem in den Figuren gezeigten Ausführungsbeispiel ein Federmittel 30, durch das zwischen dem ersten Bauteil 4 und dem zweiten Bauteil 6 eine Kraft in erster Fügerichtung 16 voneinander weg aufbaubar ist, um beide Teile voneinander wegzuspannen.

Um das Einspannen zwischen dem ersten Bauteil 4 und dem zweiten Bauteil 6 weiter zu verbessern, umfasst die Aufnahme 12 mindestens eine sich in Richtung der zweiten Fügerichtung 26 keil- oder bogenförmig erweiternde Kulisse 32, die auf der dem ersten Bauteil 4 abgewandten Seite an dem zweiten Bereich 28 der Aussparung 18 der Aufnahme 12 angeordnet ist. An dieser Kulisse 32 liegt der Kopfabschnitt 24 des Hintergriffmittels 8 in der Fügeendstellung an.

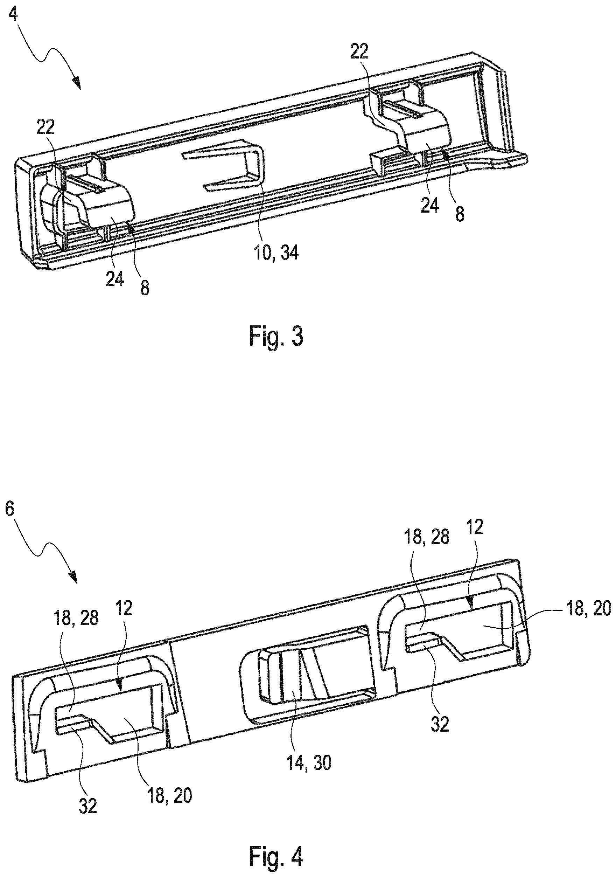

Bei dem in den Figuren gezeigten Ausführungsbeispiel, insbesondere wie in Figur 3 ersichtlich, umfasst die Rastkontur 10 eine Erhebung 34, an der das Rastelement 14 beim Überführen von der Fügezwischenstellung (Figur 1) in die Fügeendstellung (Figur 2) entlang gleitbar und bei Erreichen der Fügeendstellung außer Eingriff mit der Erhebung 34 bringbar ist, um einen Hintergriff mit der als Erhebung 34 ausgebildeten Rastkontur 10 zu bilden. Hierdurch ist eine Relativbewegung zwischen dem ersten Bauteil 4 und dem zweiten Bauteil 6 entgegen der zweiten Fügerichtung 26 gebildet.

Bei dem in den Figuren gezeigten Ausführungsbeispiel umfassen erstes Bauteil 4, Hintergriffmittel 8 sowie Rastkontur 10 ein gemeinsames Bauteil. Die Aufnahme 12, das Rastelement 14 sowie das zweite Bauteil 6 umfassen ebenfalls ein gemeinsames einstückiges Bauteil.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Festlegevorrichtung
- 4: erstes Bauteil
- 6: zweites Bauteil
- 8: Hintergriffmittel
- 10: Rastkontur
- 12: Aufnahme
- 14: Rastelement
- 16: erste Fügerichtung
- 18: Aussparung
- 20: erster Bereich
- 22: Koppelabschnitt
- 24: Kopfabschnitt
- 26: zweite Fügerichtung
- 28: zweiter Bereich
- 30: Federmittel
- 32: Kulisse
- 34: Erhebung

## Patentansprüche

1. Festlegevorrichtung (2) zum werkzeuglosen aneinander Festlegen zweier Bauteile eines Kraftfahrzeugs mit mindestens einem an einem ersten Bauteil (4) angeordneten Hintergriffmittel (8), das einen Koppelabschnitt (22) und an einem freien Ende einen Kopfabschnitt (24) aufweist, der bezüglich des Koppelabschnitts (22) einen erweiterten Querschnitt umfasst, mit mindestens einer an einem zweiten Bauteil (6) angeordneten Aufnahme (12), die eine durchgehende Aussparung (18) umfasst, welche einen ersten Bereich (20) in den das Hintergriffmittel (8) entlang einer ersten Fügerichtung (16) mit dem freien Ende in die Aussparung (18) einführbar und in einer Fügezwischenposition anordenbar ist, und welche einen zweiten Bereich (28) umfasst, der über den ersten Bereich (20) zugänglich ist, der quer zur ersten Fügerichtung (16) betrachtet einen Querschnitt umfasst, der kleiner ist als der Querschnitt des Kopfabschnitts (24) des Hintergriffmittels (8), und in den das Hintergriffmittel (8) mit seinem Koppelabschnitt (22) aus der Fügezwischenposition entlang einer quer oder schräg zur ersten Fügerichtung (16) verlaufenden zweiten Fügerichtung (26) bewegbar und in einer Fügeendposition anordenbar ist, in der das Hintergriffmittel (8) mit seinem Koppelabschnitt (22) in Gänze oder zumindest abschnittsweise in dem zweiten Bereich (28) der Aussparung (18) angeordnet und ein Bewegen entgegen der ersten Fügerichtung (16) durch den an einer dem ersten Bauteil (4) abgewandten Seite der Aufnahme (12) angeordneten Kopfabschnitt (24) zumindest begrenzt ist, und mit mindestes einem Rastelement (14), das am ersten Bauteil (4) und/oder am zweiten Bauteil (6) angeordnet ist und das zumindest beim Erreichen der Fügeendposition mit einer am zweiten Bauteil (6), bzw. ersten Bauteil (4) angeordneten Rastkontur (10) einen Hintergriff gegen eine Relativbewegung von erstem Bauteil (4) und zweitem Bauteil (6) entgegen der zweiten Fügerichtung (26) bildet, **dadurch gekennzeichnet, dass** das mindestens eine Hintergriffmittel (8) hakenförmig ausgebildet ist und/oder dass der Koppelabschnitt (22) in oder schräg zur ersten Fügerichtung (16) erstreckt ist und der Kopfabschnitt (24) den Koppelabschnitt (22) abgewinkelt oder umgebogen quer oder schräg zur ersten Fügerichtung (16) verlaufend fortsetzt.

2. Festlegevorrichtung (2) nach Anspruch 1, **dadurch gekennzeichnet, dass** der Querschnitt quer zur ersten Fügerichtung (16) des zweiten Bereichs (28) der Aussparung (18) korrespondierend, insbesondere komplementär, zum Querschnitt des Koppelabschnitts (22) des Hintergriffmittels (8) ausgebildet ist.

3. Festlegevorrichtung (2) nach mindestens einem der vorhergehenden Ansprüche, **dadurch gekennzeichnet, dass** die Aufnahme (12) mindestens eine sich in Richtung der zweiten Fügerichtung (26) keil- oder bogenförmig erweiternde Kulisse (32) umfasst, die auf der dem ersten Bauteil (4) abgewandten Seite und an den zweiten Bereich (28) der Aussparung (18) angrenzend angeordnet ist und an der der Kopfabschnitt (24) des Hintergriffmittels (8) zumindest in der Fügeendstellung anliegt.

4. Festlegevorrichtung (2) nach mindestens einem der vorhergehenden Ansprüche, **dadurch gekennzeichnet, dass** die Aufnahme (12) auf der dem ersten Bauteil (4) abgewandten Seite ein Dämpfmittel umfasst, an dem der Kopfabschnitt (24) zumindest in der Fügeendstellung anliegt und/oder dass der Kopfabschnitt (24) an dem der Aufnahme (12) in der Fügeendstellung zugewandten Seite ein Dämpfmittel umfasst mit dem der Kopfabschnitt (24) zumindest in der Fügeendstellung an der Aufnahme (12) anliegt.

5. Festlegevorrichtung (2) nach mindestens einem der vorhergehenden Ansprüche, **gekennzeichnet durch** mindestens ein Federmittel (30), das zwischen erstem Bauteil (4) und zweitem Bauteil (6) anordenbar oder angeordnet ist und durch das das erste Bauteil (4) und das zweite Bauteil (6) zumindest in der Fügeendstellung mit einer in oder schräg zur ersten Fügerichtung (16) wirkenden Kraft voneinander weg spannbar sind.

6. Festlegevorrichtung (2) nach mindestens einem der vorhergehenden Ansprüche, **dadurch gekennzeichnet, dass** das mindestens eine Rastelement (14) bezüglich der ersten Fügerichtung (16) elastisch verdrängbar ist und/oder dass das Rastelement (14) und das Federmittel (30) ein gemeinsames einstückiges Bauteil bilden.

7. Festlegevorrichtung (2) nach mindestens einem der vorhergehenden Ansprüche, **dadurch gekennzeichnet, dass** die am zweiten Bauteil (6) bzw. am ersten Bauteil (4) angeordnete Rastkontur (10) eine Vertiefung umfasst, in die das Rastelement (14) zumindest in der Fügeendstellung quer zur zweiten Fügerichtung (26) verrastbar ist und/oder dass die am zweiten Bauteil (6) bzw. am ersten Bauteil (4) angeordnete Rastkontur (10) eine Erhebung (34) umfasst, an der das Rastelement (14) beim Überführen von der Fügezwischenstellung in die Fügeendstellung entlanggleitbar und bei Erreichen der Fügeendstellung außer Eingriff mit der Erhebung (34) bringbar ist, um in Richtung auf das zweite Bauteil (6), bzw. auf das erste Bauteil (4) vorzuspringen.

8. Festlegevorrichtung (2) nach Anspruch 7, **dadurch gekennzeichnet, dass** die Rastkontur (10) einen rampenartigen Querschnitt umfasst, durch den das Rastelement (14) beim Überführen von der Fügezwischenstellung in die Fügeendstellung in Richtung quer zur zweiten Fügerichtung (26) verdrängbar ist.

9. Festlegevorrichtung (2) nach mindestens einem der vorhergehenden Ansprüche, **dadurch gekennzeichnet, dass** das erste Bauteil (4) und das zweite Bauteil (6) in der der Fügezwischenstellung zumindest abschnittsweise, insbesondere flächenhaft, aneinander anliegen.

10. Festlegevorrichtung (2) nach mindestens einem der vorhergehenden Ansprüche, **dadurch gekennzeichnet, dass** die Aufnahme (12) und/oder das Rastelement (14) lösbar oder unlösbar am zweiten Bauteil (6) festlegbar oder festgelegt sind und/oder dass das mindestens eine Hintergriffmittel (8) und/oder die Rastkontur (10) lösbar oder unlösbar am ersten Bauteil (4) festlegbar oder festgelegt sind.

11. Festlegevorrichtung (2) nach mindestens einem der vorhergehenden Ansprüche, **dadurch gekennzeichnet, dass** die Aufnahme (12), das Rastelement (14) und/oder das zweite Bauteil (6) ein einstückiges gemeinsames Bauteil bilden und/oder dass das mindestens eine Hintergriffmittel (8), die Rastkontur (10) und/oder das erste Bauteil (4) ein einstückiges gemeinsames Bauteil bilden.

12. Festlegevorrichtung (2) nach mindestens einem der vorhergehenden Ansprüche, **gekennzeichnet durch** mindestens zwei Hintergriffmittel (8) und mindestens ein zwischen den mindestens zwei Hintergriffmitteln (8) angeordnetes Rastelement (14) und/oder durch mindestens zwei Aufnahmen (12) und mindestens eine zwischen den mindestens zwei Aufnahmen (12) angeordnete Rastkontur (10).

13. Festlegevorrichtung (2) nach mindestens einem der vorhergehenden Ansprüche, **dadurch gekennzeichnet, dass** das erste Bauteil (4) eine Blende und/oder dass das zweite Bauteil (4) ein Rahmenelement des Kraftfahrzeugs umfasst.

14. Kraftfahrzeug mit mindestens einem ersten Bauteil (2), mindestens einem zweiten Bauteil (4) und mit mindestens einer Festlegevorrichtung (2) nach einem der Ansprüche 1 bis 14, durch die das erste Bauteil (4) werkzeuglos am zweiten Bauteil (6) festlegbar ist.

## Claims

1. Fixing device (2) for the tool-free fixing of two components of a motor vehicle to one another, with at least one rear gripping means (8) arranged on a first component (4), which has a coupling section (22) and at a free end a head section (24) which has an expanded cross-section with respect to the coupling section (22), with at least one receptacle (12) arranged on a second component (6), which has a continuous recess (18) which has a first region (20) into which the rear gripping means (8) can be inserted with the free end into the recess (18) along a first joining direction (16) and can be arranged in an intermediate joining position, and which has a second region (28) which is accessible via the first region (20) which, viewed transversely to the first joining direction (16), has a cross-section which is smaller than the cross-section of the Head section (24) of the rear gripping means (8), and in which the rear gripping means (8) with its coupling section (22) can be moved from the intermediate joining position along a second joining direction (26) running transversely or obliquely to the first joining direction (16) and can be arranged in a final joining position in which the rear gripping means (8) with its coupling section (22) is arranged entirely or at least in sections in the second region (28) of the recess (18) and movement against the first joining direction (16) is at least limited by the head section (24) arranged on a side of the receptacle (12) facing away from the first component (4), and with at least one latching element (14) which is arranged on the first component (4) and/or on the second component (6) and which, at least when the final joining position is reached, has a latching contour (10) arranged on the second component (6) or first component (4) and engages behind against a Relative movement of the first component (4) and second component (6) against the second joining direction (26), **characterized in that** the at least one rear gripping means (8) is hook-shaped and/or that the coupling section (22) extends in or obliquely to the first joining direction (16) and the head section (24) continues the coupling section (22) at an angle or bent over, running transversely or obliquely to the first joining direction (16).

2. Fixing device (2) according to claim 1, **characterized in that** the cross section transverse to the first joining direction (16) of the second region (28) of the recess (18) is designed to correspond, in particular complementarily, to the cross section of the coupling section (22) of the rear gripping means (8).

3. Fixing device (2) according to at least one of the preceding claims, **characterized in that** the receptacle (12) comprises at least one wedge-shaped or arcuately widening slot (32) in the direction of the second joining direction (26), which is arranged on the side facing away from the first component (4) and adjacent to the second region (28) of the recess (18) and against which the head section (24) of the rear gripping means (8) rests at least in the final joining position.

4. Fixing device (2) according to at least one of the preceding claims, **characterized in that** the receptacle (12) comprises a damping means on the side facing away from the first component (4), against which the head section (24) rests at least in the final joining position and/or that the head section (24) comprises a damping means on the side facing the receptacle (12) in the final joining position, with which the head section (24) rests against the receptacle (12) at least in the final joining position.

5. Fixing device (2) according to at least one of the preceding claims, **characterized by** at least one spring means (30) which can be arranged or is arranged between the first component (4) and the second component (6) and by means of which the first component (4) and the second component (6) can be tensioned away from one another at least in the final joining position with a force acting in or obliquely to the first joining direction (16).

6. Fixing device (2) according to at least one of the preceding claims, **characterized in that** the at least one locking element (14) is elastically displaceable with respect to the first joining direction (16) and/or that the locking element (14) and the spring means (30) form a common one-piece component.

7. Fixing device (2) according to at least one of the preceding claims, **characterized in that** the locking contour (10) arranged on the second component (6) or on the first component (4) comprises a recess into which the locking element (14) can be locked at least in the final joining position transversely to the second joining direction (26) and/or that the locking contour (10) arranged on the second component (6) or on the first component (4) comprises a raised area (34) along which the locking element (14) can slide when transferred from the intermediate joining position to the final joining position and can be disengaged from the raised area (34) when the final joining position is reached in order to project in the direction of the second component (6) or the first component (4).

8. Fixing device (2) according to claim 7, **characterized in that** the locking contour (10) comprises a ramp-like cross-section through which the locking element (14) can be displaced in a direction transverse to the second joining direction (26) when transferred from the intermediate joining position to the final joining position.

9. Fixing device (2) according to at least one of the preceding claims, **characterized in that** the first component (4) and the second component (6) rest against one another at least in sections, in particular over their entire surface, in the intermediate joining position.

10. Fixing device (2) according to at least one of the preceding claims, **characterized in that** the receptacle (12) and/or the locking element (14) can be or are fixed to the second component (6) in a detachable or non-detachable manner and/or that the at least one rear grip means (8) and/or the locking contour (10) can be or are fixed to the first component (4) in a detachable or non-detachable manner.

11. Fixing device (2) according to at least one of the preceding claims, **characterized in that** the receptacle (12), the locking element (14) and/or the second component (6) form a one-piece common component and/or that the at least one rear gripping means (8), the locking contour (10) and/or the first component (4) form a one-piece common component.

12. Fixing device (2) according to at least one of the preceding claims, **characterized by** at least two rear gripping means (8) and at least one locking element (14) arranged between the at least two rear gripping means (8) and/or by at least two receptacles (12) and at least one locking contour (10) arranged between the at least two receptacles (12).

13. Fixing device (2) according to at least one of the preceding claims, **characterized in that** the first component (4) comprises a panel and/or that the second component (4) comprises a frame element of the motor vehicle.

14. Motor vehicle with at least one first component (2), at least one second component (4) and with at least one fixing device (2) according to one of claims 1 to 14, by means of which the first component (4) can be fixed to the second component (6) without tools.

## Revendications

1. Dispositif de fixation (2) pour la fixation sans outil de deux composants d'un véhicule automobile l'un à l'autre, comprenant au moins un moyen de préhension arrière (8) disposé sur un premier composant (4), lequel présente une section d'accouplement (22) et, à une extrémité libre, une section de tête (24) qui présente une section transversale élargie par rapport à la section d'accouplement (22), avec au moins un logement (12) disposé sur un deuxième composant (6), lequel présente un évidement continu (18) qui présente une première zone (20) dans laquelle le moyen de préhension arrière (8) peut être inséré avec l'extrémité libre dans l'évidement (18) le long d'une première direction d'assemblage (16) et peut être disposé dans une position d'assemblage intermédiaire, et qui présente une deuxième zone (28) accessible par l'intermédiaire de la première zone (20), laquelle, vue transversalement à la première direction d'assemblage (16), présente une section transversale qui est inférieure à la section transversale de la section de tête (24) du moyen de préhension arrière (8), et dans laquelle le moyen de préhension arrière (8) est introduit avec sa section d'accouplement (22) depuis la position d'assemblage intermédiaire le long d'une deuxième direction d'assemblage (26) s'étendant transversalement ou obliquement par rapport à la première direction d'assemblage (16) et pouvant être disposée dans une position d'assemblage finale dans laquelle le moyen de préhension arrière (8) avec sa section d'accouplement (22) est disposé entièrement ou au moins par sections dans la deuxième région (28) de l'évidement (18) et le mouvement à l'encontre de la première direction d'assemblage (16) est au moins limité par la section de tête (24) disposée sur un côté du réceptacle (12) opposé au premier composant (4), et avec au moins un élément d'encliquetage (14) qui est disposé sur le premier composant (4) et/ou sur le deuxième composant (6) et qui, au moins lorsque la position d'assemblage finale est atteinte, présente un contour d'encliquetage (10) disposé sur le deuxième composant (6) ou le premier composant (4) pour assurer une préhension arrière contre un mouvement relatif du premier composant (4) et du deuxième composant (6) à l'encontre de la deuxième direction d'assemblage (26), **caractérisé en ce que** le ou les moyens de préhension arrière (8) sont en forme de crochet et/ou **en ce que** la section d'accouplement (22) s'étend dans ou obliquement par rapport à la première direction d'assemblage (16) et la section de tête (24) prolonge la section d'accouplement (22) en biais ou de manière courbée, s'étendant transversalement ou obliquement par rapport à la première direction d'assemblage (16).

2. Dispositif de fixation (2) selon la revendication 1, **caractérisé en ce que** la section transversale à la première direction de jonction (16) de la deuxième région (28) de l'évidement (18) est conçue pour correspondre, notamment de manière complémentaire, à la section transversale de la section d'accouplement (22) du moyen de préhension arrière (8).

3. Dispositif de fixation (2) selon au moins l'une des revendications précédentes, **caractérisé en ce que** le logement (12) comprend au moins un guide fendu ou courbé (32) qui s'élargit dans la direction de la deuxième direction d'assemblage (26), qui est disposé sur le côté opposé au premier composant (4) et adjacent à la deuxième région (28) de l'évidement (18) et contre lequel la section de tête (24) du moyen de préhension arrière (8) repose au moins dans la position d'assemblage finale.

4. Dispositif de fixation (2) selon au moins l'une des revendications précédentes, **caractérisé en ce que** le logement (12) comporte sur le côté opposé au premier composant (4) un moyen d'amortissement contre lequel la section de tête (24) repose au moins dans la position d'assemblage finale et/ou **en ce que** la section de tête (24) comporte sur le côté tourné vers le logement (12) dans la position d'assemblage finale un moyen d'amortissement avec lequel la section de tête (24) repose contre le logement (12) au moins dans la position d'assemblage finale.

5. Dispositif de fixation (2) selon au moins l'une des revendications précédentes, **caractérisé par** au moins un moyen à ressort (30) qui peut être disposé ou est disposé entre le premier composant (4) et le deuxième composant (6) et au moyen duquel le premier composant (4) et le deuxième composant (6) peuvent être écartés l'un de l'autre au moins dans la position d'assemblage finale avec une force agissant dans ou obliquement par rapport à la première direction d'assemblage (16).

6. Dispositif de fixation (2) selon au moins l'une des revendications précédentes, **caractérisé en ce que** l'au moins un élément de verrouillage (14) est déplaçable élastiquement par rapport à la première direction de jonction (16) et/ou **en ce que** l'élément de verrouillage (14) et le moyen à ressort (30) forment un composant monobloc commun.

7. Dispositif de fixation (2) selon au moins l'une des revendications précédentes, **caractérisé en ce que** le contour de verrouillage (10) disposé sur le deuxième composant (6) ou sur le premier composant (4) comprend un évidement dans lequel l'élément de verrouillage (14) peut être verrouillé au moins dans la position d'assemblage finale transversalement à la deuxième direction d'assemblage (26) et/ou **en ce que** le contour de verrouillage (10) disposé sur le deuxième composant (6) ou sur le premier composant (4) comprend une zone surélevée (34) le long de laquelle l'élément de verrouillage (14) peut coulisser lors du transfert de la position d'assemblage intermédiaire à la position d'assemblage finale et peut être dégagé de la zone surélevée (34) lorsque la position d'assemblage finale est atteinte pour faire saillie en direction du deuxième composant (6) ou du premier composant (4).

8. Dispositif de fixation (2) selon la revendication 7, **caractérisé en ce que** le contour de verrouillage (10) présente une section transversale en forme de rampe à travers laquelle l'élément de verrouillage (14) peut être déplacé dans la direction transversale à la deuxième direction d'assemblage (26) lors du transfert de la position d'assemblage intermédiaire à la position d'assemblage finale.

9. Dispositif de fixation (2) selon au moins l'une des revendications précédentes, **caractérisé en ce que** le premier composant (4) et le deuxième composant (6) dans la position de jonction intermédiaire reposent l'un contre l'autre au moins par sections, en particulier sur une surface.

10. Dispositif de fixation (2) selon au moins l'une des revendications précédentes, **caractérisé en ce que** le logement (12) et/ou l'élément de verrouillage (14) peuvent être fixés ou fixés de manière amovible ou permanente au deuxième composant (6) et/ou **en ce que** le ou les moyens de préhension arrière (8) et/ou le contour de verrouillage (10) peuvent être fixés ou fixés de manière amovible ou permanente au premier composant (4).

11. Dispositif de fixation (2) selon au moins l'une des revendications précédentes, **caractérisé en ce que** le logement (12), l'élément de verrouillage (14) et/ou le deuxième composant (6) forment un composant commun d'un seul tenant et/ou **en ce que** le ou les moyens de préhension arrière (8), le contour de verrouillage (10) et/ou le premier composant (4) forment un composant commun d'un seul tenant.

12. Dispositif de fixation (2) selon au moins l'une des revendications précédentes, **caractérisé par** au moins deux moyens de préhension arrière (8) et au moins un élément de verrouillage (14) disposé entre les au moins deux moyens de préhension arrière (8) et/ou par au moins deux logements (12) et au moins un contour de verrouillage (10) disposé entre les au moins deux logements (12).

13. Dispositif de fixation (2) selon au moins l'une des revendications précédentes, **caractérisé en ce que** le premier composant (4) comprend un panneau et/ou que le deuxième composant (4) comprend un élément de châssis du véhicule automobile.

14. Véhicule automobile comprenant au moins un premier composant (2), au moins un deuxième composant (4) et au moins un dispositif de fixation (2) selon l'une des revendications 1 à 14, au moyen duquel le premier composant (4) peut être fixé au deuxième composant (6) sans outils.
